# EUROPEAN PATENT APPLICATION

(11) **EP 2 023 631 A1**
(43) Date of publication of application: **11.02.2009**
(21) Application number: 06768262.5
(22) Date of filing: 18.07.2006
(51) Int. Cl.: H04N 7/173, H04N 5/445, H04N 5/45

(54) **TELEVISION RECEPTION DEVICE, PROGRAM, AND RECORDING MEDIUM**

(30) Priority: 24.05.2006 JP 2006143547
(71) Applicant: Sharp Kabushiki Kaisha, Osaka-shi, Osaka 545-8522 (JP)
(72) Inventor: TAKAO, Hiroyuki, Kanagawa 213-0011 (JP)
(74) Representative: Müller - Hoffmann & Partner
(86) International application number: PCT/JP2006/314163
(87) International publication number: WO 2007/135750

(57) **Abstract**

Provided is a television receiver including a multiscreen function and a web browser function and capable of performing web browser page transition without requiring manual operation of a viewer. The television receiver can perform a multiscreen display, i.e., simultaneously displaying input video data received from a plurality of video sources and a web page associated with the input video data acquired by the web browser from an external web site via communication means on single display means. The television receiver includes browser processing means for specifying an active screen (such as a screen specified by a viewer, a screen in which the video source has been changed, and a screen corresponding to input video data for which audio is output) from the screens in the multiscreen display, acquiring associated information from the input video data corresponding to the active screen, and performing multiscreen display of the web page corresponding to the associated information acquired by the web browser.

## Description

### TECHNICAL FIELD

The present invention relates to a television receiver, a program, and a recording medium, and, more particularly, to a television receiver having a multiscreen function and accessible to a network.

### BACKGROUND OF THE INVENTION

A TV program so-called "TV shopping" has been broadcasted. A TV shopping program introduces a product to viewers, and receives purchase requests for the product by phone calls, facsimile, Web page access, etc. In such a TV shopping program, in many cases, a phone number or Web page URL (Uniform Resource Locator) of a purchase request sendee is provided as display information on the TV screen in the program.

A viewer, therefore, writes down the phone number or URL of the purchase request sendee on a memo paper, and makes a phone call to the sendee or accesses the Web page of the sendee through the URL to browse the Web page.
To directly specify a URL on a television receiver, however, the viewer usually have to input a phrase that is difficult to input, using keys, buttons, etc., of a remote controller. This input operation thus gives the viewer a stress.

Besides, display of a phone number or URL on the screen may end while the viewer is still preparing a memo paper, writing down the phone number or URL, or inputting the URL. This problem is not solved even in such a case where a prerecorded URL is called up using a "favorite function" often incorporated in a Web browser.
To deal with this problem, a patent document 1 and a patent document 2 offer techniques that save a viewer a trouble of inputting a URL.

According to the technique of the patent document 1, a subtitle on TV broadcasting video is recognized by character recognition, and communication with the other party is carried out in correspondence to information specifying the other party for communication that is given by a recognition result. For example, when the recognition result represents a URL, a browser is informed of the URL to allow a viewer to browse a Web page specified by the URL.

According to the technique of the patent document 2, a date base server that links programs broadcasted through channels to URLs related to the programs is opened to the public. When a viewer presses an information acquiring button, the channels of programs are communicated to the data base server, and URLs are extracted based on the channels and the present time and are displayed on a television receiver. The viewer then selects a desired URL out of the displayed URLs to browse provided information on a program.

In digital broadcasting, information on a program, actors/actresses, players, products, etc., is broadcasted as program information together with the program, and is, therefore, displayed together with the program. In this case, a viewer selects a piece of interesting information out of displayed program information and sends out the URL of a Web page linked to the selected information. This allows the viewer to make jump access to the Web page bearing a description of desired detailed information through simple manipulation.
Patent document 1: Japanese Laid-Open Patent Publication No. 2002-44544
Patent document 2: Japanese Laid-Open Patent Publication No. 2003-18575

### DISCLOSURE OF THE INVENTION

### PROBLEM TO BE SOLVED BY THE INVENTION

Some television receivers being around these days have a multiscreen function. The above conventional techniques, however, are provided on the assumption that a Web browser uses the whole of the TV screen. The conventional techniques, therefore, do not take account of a situation where the multiscreen function is used.
When a Web page is automatically started on such a television receiver having the multiscreen function, what behavior the television receiver makes for what program on the air needs to be considered.

The present invention was conceived in view of the above circumstances, and it is therefore the object of the present invention to provide a television receiver, a program, and a recording medium that enable a television receiver having a multiscreen function and a Web browser function to carry out the transition of Web pages on a Web browser without manual operation by a viewer through an event of screen change, active channel, program change, etc.

### MEANS FOR SOLVING THE PROBLEMS

To solve the above problem, the television receiver of the present invention is capable of receiving pieces of input video data from a plurality of video sources, and of receiving a Web page that is acquired by a Web browser from an external Web site via a communication means. The television receiver is capable of displaying the pieces of input video data and the Web page all together on a single display means by multiscreen display.
The television receiver includes a browser processing means that specifies an active screen (e.g., screen specified by a viewer, screen for which the video source is changed, screen corresponding to input video data accompanying audio output, etc.), that acquires related information from the input video data corresponding to the active screen, and that displays a Web page corresponding to the related information, the Web page being acquired by the Web browser, by multiscreen display. With the browser processing means, the television receiver can carry out the transition of Web pages on the Web browser without manual operation by the viewer.

The browser processing means of the television receiver having the above configuration may be provided as a program causing a computer to work. The program may be made in advance or be recorded on a computer-readable recording medium, and is executed by the computer. This provides another solution to the above problem.

### EFFECT OF THE INVENTION

According to the present invention, a television receiver having a multiscreen function and a Web browser function is able to carry out the transition of Web pages on a Web browser without manual operation by a viewer through an event of screen change, active channel, program change, etc.

### BRIEF DESCRIPTION OF THE DRAWINGS

[Fig. 1] Fig. 1 is a diagram of a form of use of a television receiver to which the present invention applies;
[Fig. 2] Fig. 2 depicts an example of division of the screen of the television receiver into multiscreens;
[Fig. 3] Fig. 3 is a block diagram of a configuration of one embodiment of the television receiver to which the present invention applies;
[Fig. 4] Fig. 4 depicts a case where a Web page for an active screen is displayed when video is on display in two screen mode;
[Fig. 5] Fig. 5 depicts a case where a Web page for a screen having turned active in a state of channel selectable is displayed; and
[Fig. 6] Fig. 6 depicts a case where a Web page for a screen having turned active in an audio reproduction state is displayed.

### EXPLANATIONS OF REFERENCE NUMERALS

100...television receiver; 101...control portion; 102...memory portion; 103...tuner portion; 104...separating portion; 105...decoding portion; 106...sound processing portion; 107...sound output portion; 108...image processing portion; 109...OSD processing portion; 110...display portion; 111 ... remote controller I/F portion; 112...communication I/F portion; 113...browser processing portion; 120...remote controller; 130...network.

### PREFERRED EMBODIMENTS OF THE INVENTION

An embodiment of the present invention will now be described with reference to the drawings.

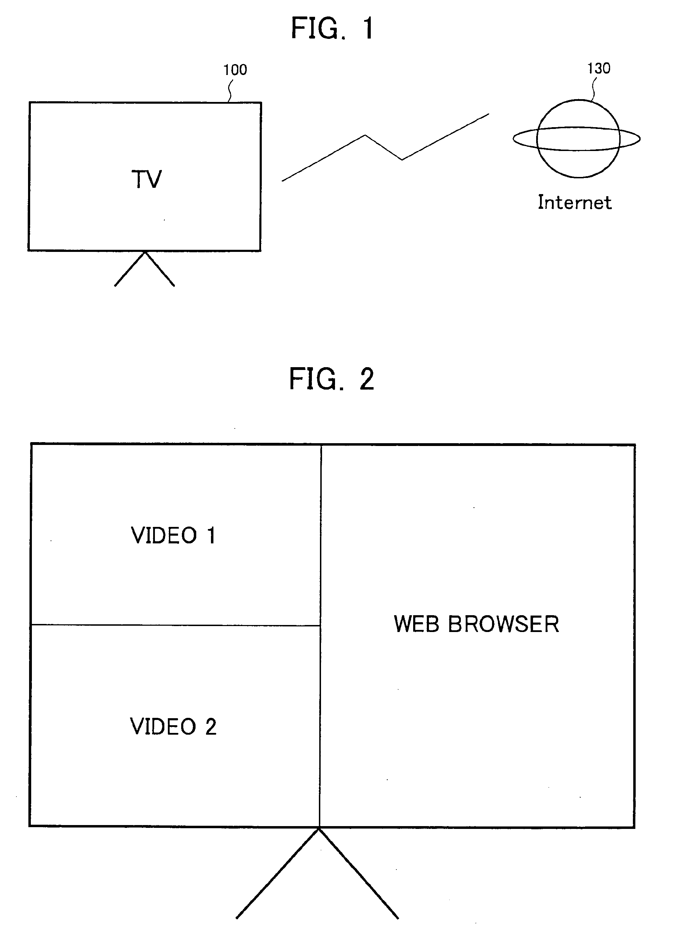

Fig. 1 is a diagram of a form of use of a television receiver to which the present invention applies. The television receiver 100 is connected to a network 130, such as the Internet, and acquires information related to a broadcasting program from a Web server connected to the network 130 using a Web browser built in the television receiver to display the acquired information together with the broadcasting program on the screen of the television receiver.

As shown in Fig. 2, the television receiver 100 is capable of simultaneously displaying a plurality of screens, thus capable of displaying video of programs receiving through different tuners, video input from an external terminal, and a Web browser output screen on the plurality of screens. Displaying a plurality of screens is referred to as multiscreen display, while displaying a single screen is referred to as ordinary display.
In multiscreen display, division of the screen may be carried out automatically by the television receiver as occasion demands, or may be predetermined by a viewer in fixed division patterns of two screens, three screens, four screens, etc. Linking a screen to a subject to be displayed on the screen may be carried out automatically by the television receiver, or may be carried out by the viewer by assigning the subject to the screen.

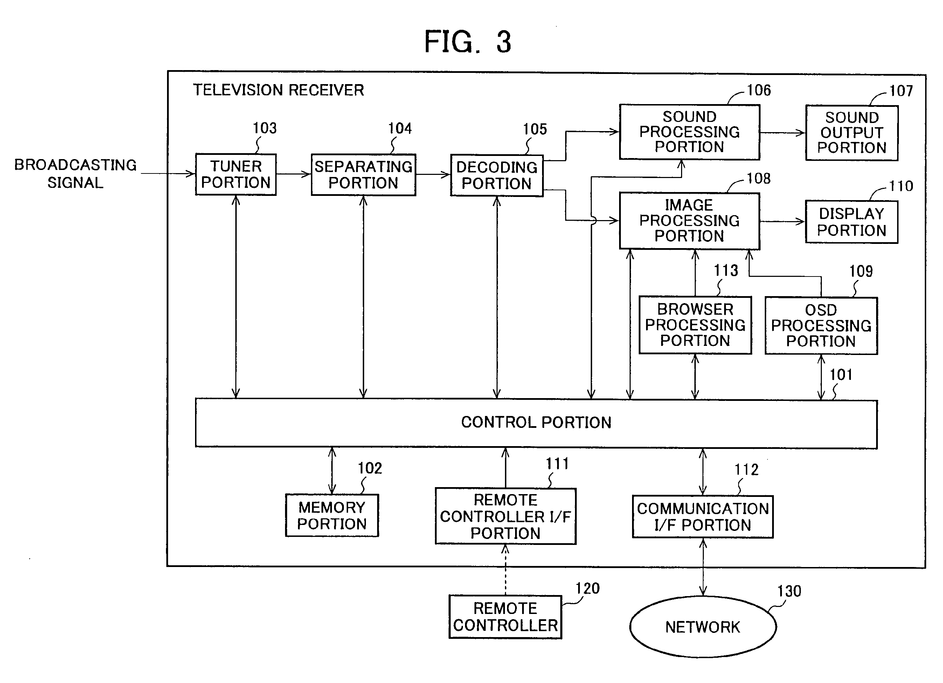

Fig. 3 is a block diagram of a configuration of one embodiment of the television receiver 100 to which the present invention applies. In Fig. 3, the television receiver 100 includes a control portion 101, memory portion 102, a tuner portion 103, a separating portion 104, a decoding portion 105, a sound processing portion 106, a sound output portion 107, an image processing portion 108, an OSD processing portion 109, a display portion 110, a remote controller I/F portion 111, a communication I/F portion 112, and a browser processing portion 113.

The control portion 101 has a CPU (Central Processing Unit), controlling the overall operation of the television receiver 100 and adjusting functions of the television receiver 100. The control portion 101 is connected to the tuner portion 103, the separating portion 104, the decoding portion 105, the image processing portion 108, and the OSD processing portion 109, via buses.

The memory portion 102 is composed of a volatile memory and a nonvolatile memory. The nonvolatile memory has stored thereon various application programs for executing various functions of the television receiver, various data for an OSD (On-Screen Display) process, data for channel selection, etc., and the volatile memory is used as a work memory.

The tuner portion 103 is composed of a plurality of tuners, each of which receives a broadcasting wave to a selected channel via an antenna, demodulates the received broadcasting wave, carries out an error correction process, etc., on the demodulated broadcasting wave to turn it to a TS (Transport Stream) signal, and supplies the TS signal to the separating portion 104.

The separating portion 104 is composed of separating portions that are equal in number to the tuners. The separating portion 104 separates a TS (Transport Stream) signal into a video stream, an audio stream, and EPG (Electric Program Guide) data, and supplies the separated video stream and audio stream to the decoding portion 105 while supplying the separated EGP data to the control portion 101.
The decoding portion 105 is composed of decoding portions equal in number to the tuners. The decoding portion 105 decodes an audio stream to turn it to noncompressive digital audio data and outputs the digital audio data to the sound processing portion 106, and also decodes a video stream to turn it to noncompressive digital video data and outputs the digital video data to the image processing portion 108.

The sound processing portion 106 selects a piece of audio data for an active channel (which will be described later) out of audio data supplied from the decoding portion 105, and causes the sound output portion 107, which is composed of a speaker, headphone, etc. , to output an analog audio signal that is generated from the selected audio data.

The OSD processing portion 109 generates OSD display image data, such as a menu screen and guidance supplied from the control portion 101, based on an operation input signal input through operation on a remote controller 120, and supplies a display screen specified by the control portion 101 and the generated image data to the image processing portion 108.

The image processing portion 108 refers to a display information table. When finding out that a screen to display video data to be processed is not present, the image processing portion 108 automatically changes the arrangement and size of existing screens to generate a new screen, and updates the display information table.
The image processing portion 108 then generates image data by subjecting video data supplied from the decoding portion 105 and Web page contents supplied from the browser processing portion 113 to resolution conversion in adjustment to the size of screens, and synthesizes each of image data into image data for a single screen in adjustment to the disposition of each screen. In addition, the image processing portion 108 superposes image data supplied from the OSD processing portion 109 onto a specified screen, and converts the image data in adjustment to the characteristics of the display portion 110 composed of an LCD (Liquid Crystal Display), PDP (Plasma Panel Display), etc., to cause the display portion 110 to display the image data.

The display information table is the table that has stores thereon information on each of divided screens resulting from division of the display portion 110 into multiscreens. The display information table stores thereon the following data on each of divided screens.

Screen ID: Identifier for identifying a divided screen.
Input information: Input information indicates from where a displayed image as input data is input. When a broadcasting wave is input from a tuner, therefore, input information is given as a channel number. In a case of external input, input information indicates from which external terminal input data is input. In a case of input from a Web browser, input information indicates whether input data is input from the Web browser.
Screen position: Coordinate position that indicates at which position on the display portion 110 a screen is to be displayed.
Screen size: Size of a screen that is expressed, for example, in pixels.
Flag: Classification information indicative of whether a screen is active ("true" or "false").

The flag is set to "true" in the following cases, and is set to "false" in other cases.
(1) A screen specified by a viewer to allow channel selection operation.
(2) A screen corresponding to a channel selected by the viewer, or a screen corresponding to an external memory device that is given a reproduction instruction.
(3) A screen corresponding to a channel at which video sound is emitted, or a screen corresponding to the external memory device that emits reproduced sound.
(4) A screen corresponding to a channel having turned active in response to activation at the television receiver side or corresponding to the external memory device in a reproduction state. A channel's turning active in response to activation at the television receiver side is considered to be a case where a time for reproducing or broadcasting a scheduled program arrives or a case where a TV station makes an active call.

When a display subject is not present any more, the control portion 101 asks the image processing portion 108 to delete a screen for the display subject. As a result, the image processing portion 108 deletes information of the screen to be deleted from the display information table, and recalculates screen arrangement and screen sizes for use of a vacant display area to refresh the display portion 110. At this time, the screen may not be refreshed as an input information data item in the display information table is deleted.
The viewer may operate the remote controller 120 to prepare the above display information table in advance through screen division.

The remote controller I/F portion 111 receives an operation input signal transmitted by a press to a key or button on the remote controller 120, and sends the operation input signal to the control portion 101. Based on this operation input signal, the control portion 101 causes other component portions to execute a process specified by the viewer.
The communication I/F portion 112 has a communication function given by, for example, a modem or Ethernet (registered trademark), and can be connected through the communication function to a Web server connected to the network 130.

Conventionally, to obtain the detail of information displayed on a screen or information on a product related to the displayed information, the viewer starts a Web browser to search for desired information on a searching engine using the displayed information, or inputs or selects a URL (Uniform Resource Locator) to display a Web page corresponding to the URL.

This results in an operation burden on the viewer. According to the present invention, when video broadcasted at an active channel contains a URL related to the video or information substituting the URL, a Web browser is automatically started to obtain a Web page, which is displayed on the screen of the television receiver 100.
In a case of ordinary display, a Web page for a displayed program is acquired and displayed. In a case of multiscreen display, however, it is difficult to determine which Web page to obtain among Web pages for programs displayed on multiscreens, and is also difficult to determine for which program a Web page is displayed.

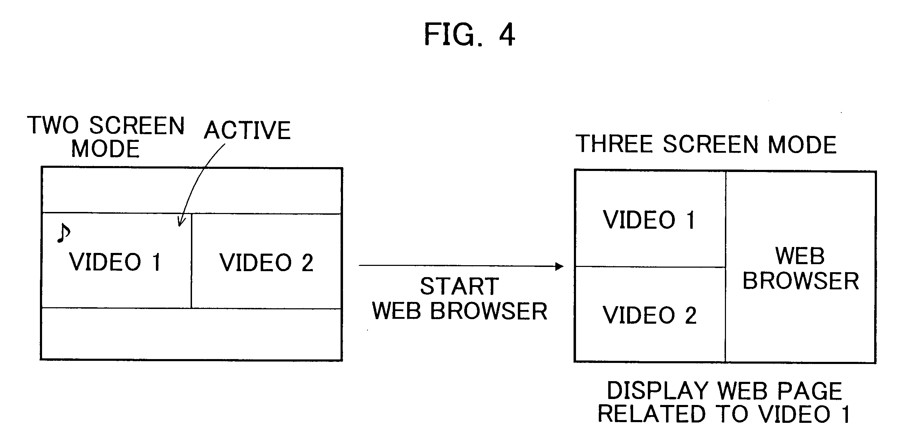

For example, as shown in Fig. 4, when pieces of video from two channels are displayed on two divided screens and the video (video 1) displayed on the divided screen at the left in a front view is active, information on the video 1 (e.g., URL, keyword, etc.) is acquired, and a Web page corresponding to the acquired information is acquired by the browser and is displayed on another screen. When a screen for displaying thereon an output image from the Web browser is present already, the acquired Web page is displayed on this screen. When a screen for displaying an image from the Web browser is not present, for example, the whole screen is divided into three screens, as shown in Fig. 4, and the acquired Web page is displayed on one of three divided screens.

The browser processing portion 113 is called up by the control portion 101 for each of video data decoded at the decoding portion 105 and externally input video data, and executes the following functions.
(1) Depending on from where the video data is input, the browser processing portion 113 refers to the display information table to determine whether the flag is set to "true" or "false".
(2) The flag set to "false" means the video data is not active, so that the browser processing portion 113 does not execute a process to follow.

(3) The flag set to "true" means the video data is active, so that the browser processing portion 113 acquires information related to the video data (e.g., URL, keyword, etc.).
A known method may be adopted as a method of acquiring this information. For example, the information may be acquired from program information carried on a broadcasting wave, and when the video data represents video from a recorder recording thereon a broadcasting program, the information may be acquired from program information recorded on the recorder.

(4) The browser processing portion 113 then starts the Web browser built in the television receiver 100 to access a Web server indicated by the above acquired information (e.g., URL, keyword, etc.) via the communication I/F portion 112.
(5) The browser processing portion 113 sends the contents of a Web page coming in from the Web server to the image processing portion 108.

Receiving the contents of the Web page sent from the browser processing portion 113, the image processing portion 108 refers to the display information table. When a screen for displaying the Web page is present, the image processing portion 108 puts the received Web page contents display on the screen. When a screen for displaying the Web page is not present, on the other hand, the image processing portion 108 newly carries out screen division to generate the screen for displaying the Web page, updates the display information table, and then puts the received Web page contents display on the generated screen.

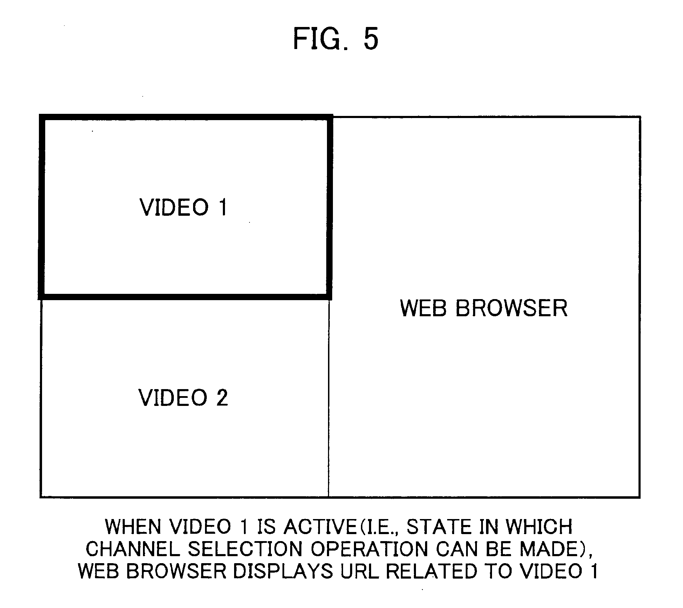

For example, when the screen for the video 1 is turned active by channel selection on the remote controller 120 by the viewer, the contents of a Web page located by a URL related to the video 1 are displayed on a screen displaying the Web browser, as shown in Fig. 5. When the screen for the video 2 is active, the contents of a Web page located by a URL related to the video 2 are displayed on the same screen displaying the Web browser.

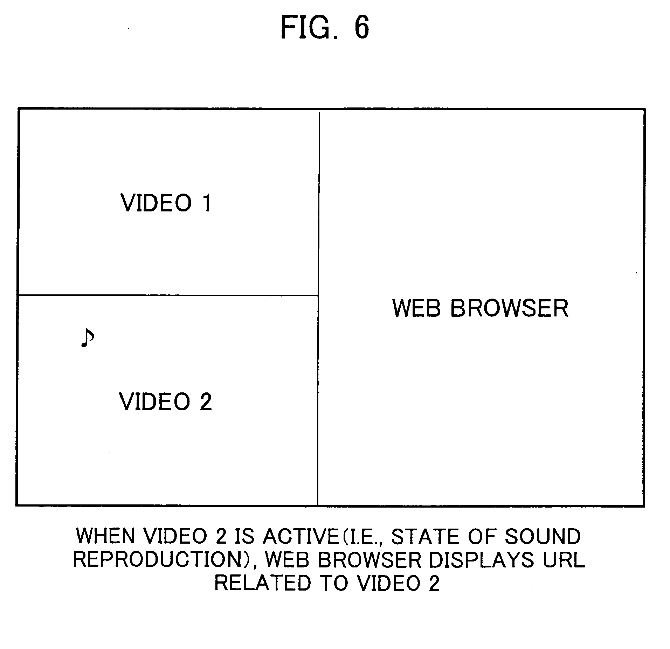

When the screen for the video 2 is turned active as a result of sound reproduction, the contents of a Web page located by a URL related to the video 2 are displayed on a screen displaying the Web browser, as shown in Fig. 6. When the screen for the video 1 are active as a result of sound reproduction, the contents of a Web page located by a URL related to the video 1 are displayed on the same screen displaying the Web browser.

Conventionally, a viewer determines a URL based on information of a program and specifies the URL on a Web browser to obtain desired information. According to the above configuration, the transition of pages on the Web browser can be carried out without manual operation by the viewer through an event of screen change, active channel, program change, etc. As a result, more various Web pages can be provided.

The embodiment of the present invention is also achieved by providing the control portion 101 and the browser processing portion 113 as a computer program and executing the computer program. Recording this computer program on a removable recording medium makes the program transferrable, which enables easy execution of the program on another independent television receiver.

## Claims

1. A television receiver that displays received each of pieces of input video data from a plurality of video sources and a Web page related to the input video data which is acquired from an external Web site by a Web browser via a communication means, on a single display means in multiscreen display, the television receiver comprising:
a browser processing means that specifies an active screen among the displayed multiscreens, wherein the browser processing means acquires related information from the input video data corresponding to the active screen and displays a Web page corresponding to the related information that is acquired by the Web browser in multiscreen display.

2. The television receiver as defined in claim 1, wherein the active screen is a screen specified by a viewer.

3. The television receiver as defined in claim 1, wherein
the active screen is a screen for which the video source is changed.

4. The television receiver as defined in claim 1, wherein
the active screen is a screen corresponding to input video data accompanying audio output.

5. A program operable to drive a computer to function as a browser processing means of the television receiver as defined in any one of claims 1 to 4.

6. A computer-readable recording medium having the program as defined in claim 5 recorded thereon.
